# EUROPEAN PATENT APPLICATION

(11) **EP 3 866 560 A1**
(43) Date of publication of application: **18.08.2021**
(21) Application number: 18936708.9
(22) Date of filing: 11.10.2018
(51) Int. Cl.: H04W 92/18, H04W 4/08, H04W 76/14, H04W 84/18

(54) **USER DEVICE**

(71) Applicant: NTT DOCOMO, INC., Chiyoda-ku Tokyo 100-6150 (JP)
(72) Inventor: OSAWA, Ryosuke, Tokyo 100-6150 (JP); ZHENG, Xufei, Beijing, 100190 (CN); WANG, Huan, Beijing, 100190 (CN); HOU, Xiaolin, Beijing, 100190 (CN)
(74) Representative: Hoffmann Eitle
(86) International application number: PCT/JP2018/037985
(87) International publication number: WO 2020/075279

(57) **Abstract**

A disclosed user device includes a control unit configured to perform scheduling for another user device within a group in device-to-device direct communications; a transmitter configured to transmit information relating to determination of joining the group to the another user device; and a receiver configured to receive information of a joining-the-group request from the another user device.

## Description

### TECHNICAL FIELD

The present invention relates to a user device in a radio communication system.

### BACKGROUND ART

In LTE (Long Term Evolution) and LTE successor systems (e.g., LTE-A (LTE Advanced), NR (New Radio) (also referred to as 5G)), D2D (Device to Device) technology in which user devices communicate directly without using base stations has been discussed (e.g., Non-Patent Document 1).

The D2D reduces traffic between the user device (also referred to as "UE (user equipment)") and the base station, and enables communication between the user devices even when the base station becomes unable to perform communications in the event of a disaster, etc. In the 3GPP (3rd Generation Partnership Project), D2D is referred to as "sidelink", but the more general term D2D is used herein. However, in the description of the embodiments described below, sidelink is also used as necessary.

D2D communications are broadly divided into D2D discovery for discovering other user devices capable of communications, and D2D communications (also called D2D direct communications, D2D communications, device-to-device direct communications, etc.,) for communicating directly between user devices. Hereinafter, when D2D communications, D2D discovery, etc., are simply referred to as D2D when they are not specifically distinguished from each other. The signal transmitted and received by D2D is called a D2D signal. Various use cases of V2X (Vehicle to Everything) services in NR have been discussed (e.g. Non-Patent Document 2).

### RELATED ART DOCUMENTS

### NON-PATENT DOCUMENTS

[Non-patent Document 1] 3GPP TS 36.211 V15.2.0 (2018-06)
[Non-patent Document 2] 3GPP TR 22.886 V15.1.0 (2017-03)

### SUMMARY OF THE INVENTION

### PROBLEM TO BE SOLVED BY THE INVENTION

In device-to-device direct communications in V2X, a technology in which a plurality of user devices form a group is discussed. A user device that intends to join a group needs to find a user device that acts as a header that performs scheduling of the group. However, the criteria for joining the group of the discovered header has been unclear.

The present invention has been made in light of the above-described point, and an object of the present invention is to enable a user device to join an appropriate group in device-to-device direct communications.

### [MEANS FOR SOLVING PROBLEM]

According to the disclosed technology, a user device is provided. The user device includes a control unit configured to perform scheduling on another user device within a group in device-to-device direct communications; a transmitter configured to transmit information relating to determination of joining the group to the another user device; and a receiver configured to receive information of a joining-the-group request from the another user device.

### [ADVANTAGE OF THE INVENTION]

According to the disclosed technique, a user device is enabled to join an appropriate group in device-to-device direct communications.

### BRIEF DESCRIPTION OF DRAWINGS

FIG. 1 is a diagram illustrating V2X;
FIG. 2 is a diagram illustrating an example (1) of a radio communication system according to an embodiment of the present invention;
FIG. 3 is a diagram illustrating an example (2) of a radio communication system according to an embodiment of the present invention;
FIG. 4 is a sequence diagram illustrating an example of joining a group in an embodiment of the present invention;
FIG. 5 is a diagram illustrating an example of measurement and determination in an embodiment of the present invention;
FIG. 6 is a diagram illustrating an example of signal transmission in an embodiment of the present invention;
FIG. 7 is a diagram illustrating an example of operation relating to a positional state of a group according to an embodiment of the present invention;
FIG. 8 is a diagram illustrating an example of a functional configuration of a base station 10 according to an embodiment of the present invention;
FIG. 9 is a diagram illustrating an example of a functional configuration of a user device 20 according to an embodiment of the present invention; and
FIG. 10 is a diagram illustrating an example of a hardware configuration of a base station 10 or a user device 20 according to an embodiment of the present invention.

### EMBODIMENTS OF THE INVENTION

Hereinafter, embodiments of the present invention will be described with reference to accompanying drawings. Note that the embodiments described below are merely examples and the embodiments to which the present invention is applied are not limited to the following embodiments.

In an operation of the radio communication system of an embodiment of the present invention, existing techniques are optionally used. It should be noted that, although the conventional techniques are relating to the existing LTE, the conventional techniques are not limited to the existing LTE. Further, it is assumed that the term "LTE" as used herein, unless otherwise specified, should have a broad meaning that includes LTE-Advanced and LTE-Advanced or later (e.g., NR) or a wireless LAN (local area network).

In an embodiment of the present invention, the duplex scheme may be a TDD (Time Division Duplex) scheme, FDD (Frequency Division Duplex) scheme, or any other scheme (e.g., Flexible Duplex, etc.).

In an embodiment of the present invention, the term "configure" may mean that a predetermined value is pre-configured, or a radio parameter indicated by the base station 10 or the user device 20 is configured (set).

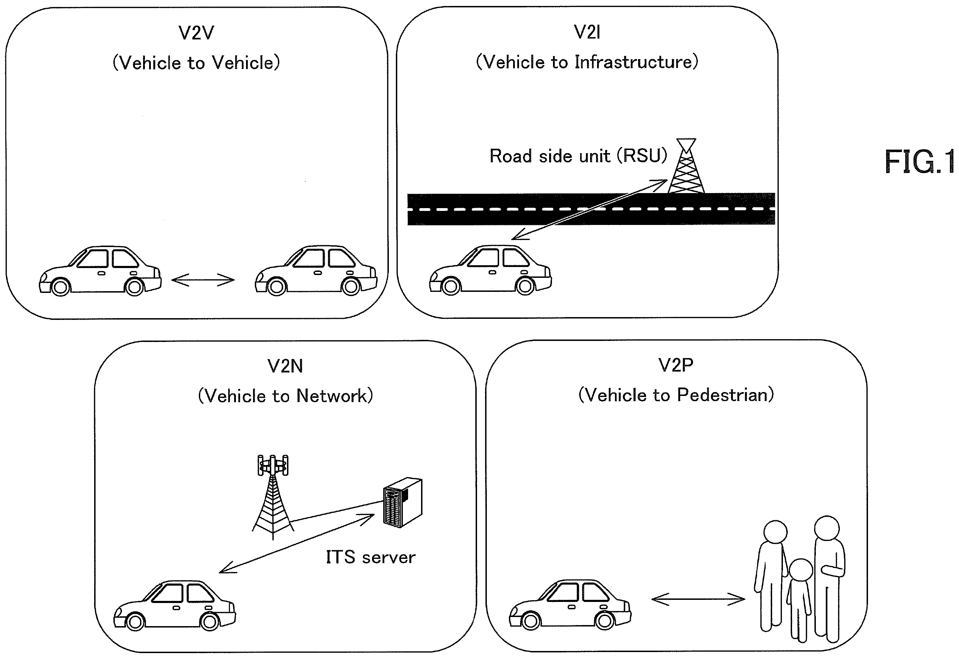

FIG. 1 is a diagram illustrating V2X. In the 3GPP, discussions have been made to realize V2X (Vehicle to Everything) or eV2X (Enhanced V2X) by extending the D2D functions, and technical specifications have been developed. As shown in FIG. 1, V2X is part of the ITS (Intelligent Transport Systems), and is a generic term for V2V (Vehicle to Vehicle), which means a mode of communication performed between vehicles, V2I (Vehicle to Infrastructure), which means a mode of communication performed between a vehicle and a roadside unit (RSU: Road-Side Unit) installed beside the road, V2N (Vehicle to Network), which means a mode of communication performed between a vehicle and an ITS server, and V2P (Vehicle to Pedestrian), which means a mode of communication performed between a vehicle and a mobile terminal carried by a pedestrian.

In addition, V2X using cellular communication and device to device (terminal-to-terminal) communication of LTE or NR has been discussed in 3GPP. V2X using cellular communication is also called cellular V2X. In the V2X of NR, discussions have been made to achieve high capacity, low latency, high reliability, and QoS (quality of service) control.

Discussions of V2X in LTE or NR will not be limited to the 3GPP technical specifications. For example, the following items will be discussed: ensuring interoperability, reducing costs by implementing the upper layer, combining or switching multiple RATs (Radio Access Technology), supporting regulations in each country, and acquiring, distributing, managing and using data on the LTE or NR V2X platform.

Embodiments of the present invention are based mainly on, but are not limited to, a mode in which a communication device is installed in a vehicle. For example, the communication device may be a terminal carried by a person, the communication device may be a drone or airborne device, or the communication device (base station, user device, etc.) may be a base station, RSU, relay node, a user device having scheduling capability, or the like.

The SL (Sidelink) may be distinguished from UL (Uplink) or DL (Downlink) based on one of or a combination of the following 1) to 4). The SL may also be a different name.
1) Resource arrangement in the time domain
2) Resource arrangement in the frequency domain
3) Reference synchronization signal (including SLSS (Sidelink Synchronization Signal))
4) Reference signal used for path loss measurement for transmission power control

In addition, with respect to SL or UL OFDM (Orthogonal Frequency Division Multiplexing), any of CP-OFDM (Cyclic-Prefix OFDM), DFT-S-OFDM (Discrete Fourier Transform-Spread-OFDM), OFDM without Transform precoding, and OFDM with Transform precoding may be applied.

In the SL of LTE, Mode 3 and Mode 4 are specified for the allocation of SL resources to the user device 20. In Mode 3, transmission resources are dynamically allocated by the DCI (Downlink Control Information) transmitted from the base station 10 to the user device 20. In Mode 3, SPS (Semi Persistent Scheduling) is also possible. In Mode 4, the user device 20 selects the transmission resource autonomously from the resource pool.

The slots in embodiments of the present invention may be replaced with symbols, minislots, subframes, radio frames, and TTIs (Transmission Time Interval). Cells in embodiments of the present invention may also be replaced with cell groups, carrier components, BWP, resource pools, resources, RAT (including Radio Access Technology), systems (including wireless LANs), and the like.

At least the following modes 1) and 2) have been discussed as sidelink resource allocation modes in NR-V2X.
Mode 1) The base station 10 schedules the sidelink resources used to transmit the sidelink.
Mode 2) The user device 20 determines resources to be used for sidelink transmission within a sidelink resource range configured by the base station 10 or the network, or within a predetermined sidelink resource range.

The LTE sidelink resources controlled by eNB (enhanced Node-B) and the NR sidelink resources controlled by gNB (next generation Node-B) have been discussed individually. As a sub-mode of mode 2) above, the following a) to d) have been discussed including future changes.

a) a user device 20 autonomously determines the resources used for sidelink transmission.
b) a user device 20 assists other user devices 20 in selecting the resources to be used for sidelink transmission.
c) a user device 20 is provided with a sidelink transmission grant.
d) a user device 20 schedules sidelink transmission of other user devices 20.

Typically, there are three types of MAC (Media Access Control) configurations for ad-hoc networks such as V2X: distributed, semi-distributed, and centralized. In a centralized MAC, resource allocation is performed by the base station 10 as a coordinator/manager.

For example, LTE Sidelink Transmission mode-3, etc., corresponds to the centralized MAC. The disadvantage of the centralized MAC is that the centralized MAC cannot be operated outside of coverage, for example. The base station 10 is also affected by the excessive overhead relating to SR (Scheduling Request) and BSR (Buffer Status Report). For example, if a large number of UE-equipped vehicles transmit SR and BSR, a large overhead is expected; hence, the network needs to support a low-delay SR procedure.

In distributed MAC, there is no coordinator to allocate resources. For example, 802.11p, LTE Sidelink Transmission mode-4, and the like correspond to distributed MAC. Disadvantages of the distributed MAC are as follows. LTE-V (Vehicle) mode 4 expects periodical traffic, and is not suitable for non-periodical traffic. 802.11p with CSMA (Carrier Sense Multiple Access)-based MACs cannot meet high reliability requirements in situations where there are many resource conflicts and large numbers of terminals.

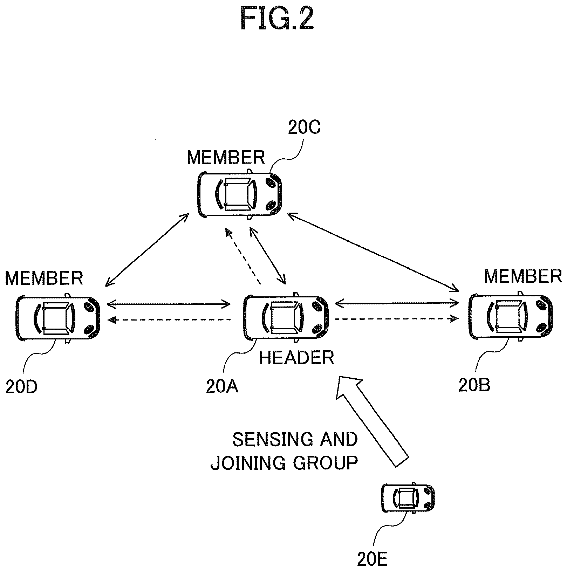

FIG. 2 is a diagram illustrating an example (1) of a radio communication system according to an embodiment of the present invention. The radio communication system illustrated in FIG. 2 is a configuration example of a semi-distributed MAC. In this semi-distributed MAC, the UE group is constituted by user devices 20 that include a user device of at least one header, and user devices of one or more members. In the example of FIG. 2, there is a UE group including four user devices 20: a user device 20A acting as a header, and a user device 20B, a user device 20C, and a user device 20D acting as respective members. In the semi-distributed MAC, resource allocation or scheduling is performed by the user device 20A acting as a coordinator/manager. In a semi-distributed MAC, the plurality of user devices 20 is grouped into UE groups each consisting of one or more user devices 20, and SL resource allocation or scheduling is performed on a user device 20 acting as a member by a user device 20 acting as a UE group header (a header of UE group). The scheduling of semi-distributed MACs can resolve the above drawbacks of distributed or centralized MACs. The user device 20 acting as a header may allocate or schedule resources to other user devices 20 for use in device-to-device direct communications within a resource set associated with a UE group in the UE group consisting of a plurality of user devices 20. Resources for use in device-to-device direct communications may be allocated or scheduled by the user device 20 acting as header with respect to a certain user device 20 in a UE group including a plurality of user devices 20.

A user device 20E shown in FIG. 2 senses or measures a signal transmitted from the user device 20A acting as a UE group header (hereinafter referred to as "sensing"), and determines joining of the UE group based on the results of the sensing. "Sensing" may be a predetermined measurement, such as RSRP (Reference Signal Received Power) measurement, RSRQ (Reference Signal Received Quality) measurement, SINR (Signal to Noise Plus Interference Ratio) measurement, CBR (Channel busy ratio) measurement, or the like. Hereinafter, the "UE Group" may also be referred to as the "Group".

The user device 20 acting as a group header may transmit information relating to the aforementioned sensing-based determination of joining a group to an adjacent user device 20 in order to form or maintain a configuration of the semi-distributed MAC. An index of the resource set associated with a group may be broadcast as information relating to determination of joining a group. Information relating to determination of joining a group may be indicated by PHY layer signaling or upper layer signaling. The information relating to determination of joining a group may be indicated to the adjacent user device 20 via a particular sequence, e.g., a particular SLSS sequence. In addition, the information relating to determination of joining a group may be indicated to the adjacent user device 20 by control information via MAC-CE (Media Access Control-Control Element)/Header, RRC (Radio Resource Control) signaling, PSBCH (Physical Sidelink Broadcast Channel), PSCCH (Physical Sidelink Control Channel), and PSSCH (Physical Sidelink Shared Channel). PSBCH and/or PSCCH may be masked with a specific (UE-specific, Group-specific, etc.) RNTI (Radio Network Temporary Identifier) or a common RNTI. The information relating to determination of joining a group may be broadcast periodically or by event triggering. For example, in a resource set associated with a group, if the scheduled resource ratio falls below a predetermined threshold, broadcasting of information relating to determination of joining a group may be performed. The threshold of the resource ratio may be set or predefined.

In addition, a semi-distributed MAC may be applied to a predetermined resource set or the like. For example, the application of a semi-distributed MAC may be set for each resource pool, carrier, or band. Both semi-distributed and distributed MACs may be applied or set to the same resource set. For example, if both semi-distributed MAC and distributed MAC are set in a resource set, and CBR is set or exceeds a predefined threshold, a semi-distributed MAC may be applied to the resource pool, otherwise distributed MAC may be applied, and the semi-distributed MAC and the distributed MAC may be switched based on other criteria. Also, a semi-distributed MAC may be applied on an individual basis to a user device 20. For example, if a semi-distributed MAC is applied to the user devices 20, which may be a part of or all of the group members of a group, the resource allocation or scheduling may be performed based on a semi-distributed MAC, otherwise a distributed MAC may be applied.

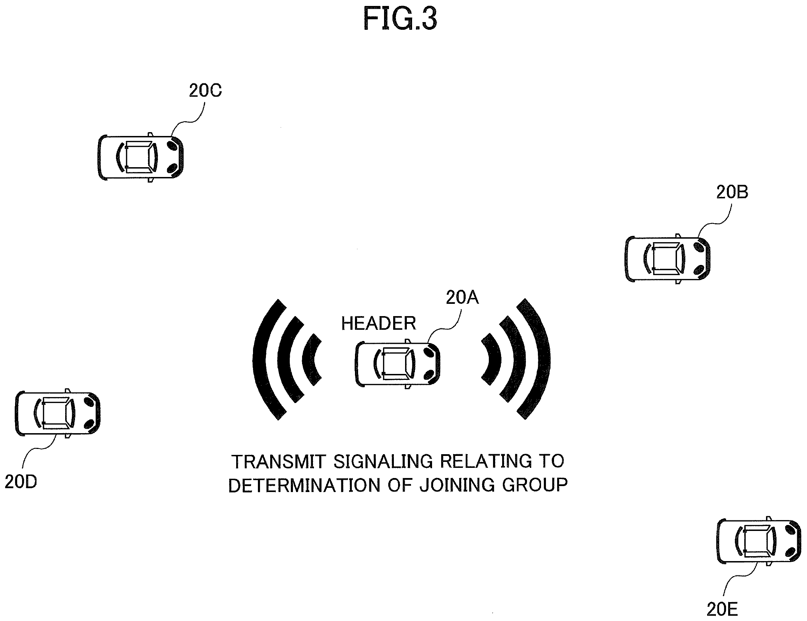

FIG. 3 is a diagram illustrating an example (2) of a radio communication system according to an embodiment of the present invention. Another user device 20 adjacent to the user device 20A acting as a header performs sensing on the signal transmitted by the header to find the group header. In this case, other user devices 20 adjacent to the user device 20A acting as a header require a threshold value with respect to the sensing result to determine whether or not to join a group to which the header belongs. Accordingly, as shown in FIG. 3, the user device 20A acting as a header may transmit, to the surrounding user devices 20, information relating to determination of joining a group, the information including a threshold of sensing.

Table 1 shows examples of a sensing threshold.

**[Table 1]**

| INDEX | Candidate threshold |
|---|---|
| 1 | n1 dBm |
| 2 | n2 dBm |

As shown in Table 1, an index is associated with a candidate threshold. Index 1 corresponds to n1 dBm, and index 2 corresponds to n2 dBm. A user device 20 acting as a header may select a threshold from candidate thresholds and transmit an index associated with the selected candidate threshold to another adjacent user device 20. For example, when an index 1 is received based on information relating to determination of joining a group, the adjacent user device 20 senses a threshold for the sensing result as n1 dBm. For example, if an RSRP greater than n1 dBm is measured as a result of measuring the signal transmitted by the user device 20 acting as a header, the joining of the group to which the header belongs may be determined. The index to be measured may be, but not limited to, RSRP, RSRQ, RSSI, SINR, etc., and a threshold suitable for the index is included in the information relating to determination of joining a group. Note that when RSRQ or SINR is used as an index, the unit of threshold is dB instead of dBm.

The minimum or maximum number of members per group may be set or predetermined. If the number of members of a group is less than the minimum number of members, the header may reduce or increase a threshold in Table 1. Further, if the number of members of a group is greater than the maximum number of members, the header may increase or decrease a threshold in Table 1. The value to be reduced or increased may be set by the base station 20 or may be specified in the technical specification documentation.

It should be noted that selection or reselection of any of the candidate thresholds shown in Table 1 to be indicated to the other user device 20 may depend on the implementation of the user device 20 acting as a header. For example, a candidate threshold may be determined based on the UE capability of the user device 20 or the number of members of the group.

Information relating to the determination of joining a group other than the candidate threshold may include identifiers identifying a header, such as group IDs, information indicating whether or not signaling is from the header, and the like.

Information relating to the determination of joining a group may be transmitted from the user device 20 acting as a header via PHY layer signaling or upper layer signaling. For example, regarding the information relating to determination of joining a group, SCI (Sidelink Control Information), MAC-CE or RRC signaling may be transmitted from a user device 20 acting as a header via PSBCH, PSCCH or PSSCH. PSBCH or PSCCH may be masked with a specific (UE-specific, Group-specific, etc.) RNTI or a common RNTI.
Indication (Notification) of information relating to determination of joining a group may be made by the SLSS itself.

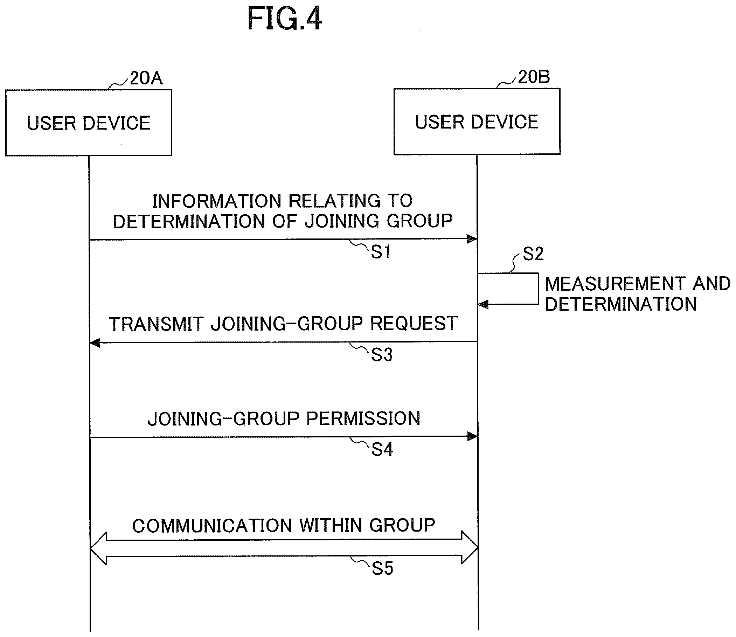

FIG. 4 is a sequence diagram illustrating an example of joining a group in an embodiment of the present invention. The user device 20A shown in FIG. 4 is a group header and the user device 20B is a user device 20 that intends to join a group. In step S1, the user device 20A transmits information relating to determination of joining a group to the user device 20B. Subsequently, the user device 20B performs sensing of a signal from the user device 20A and determines whether or not to join the group based on the received information (S2).

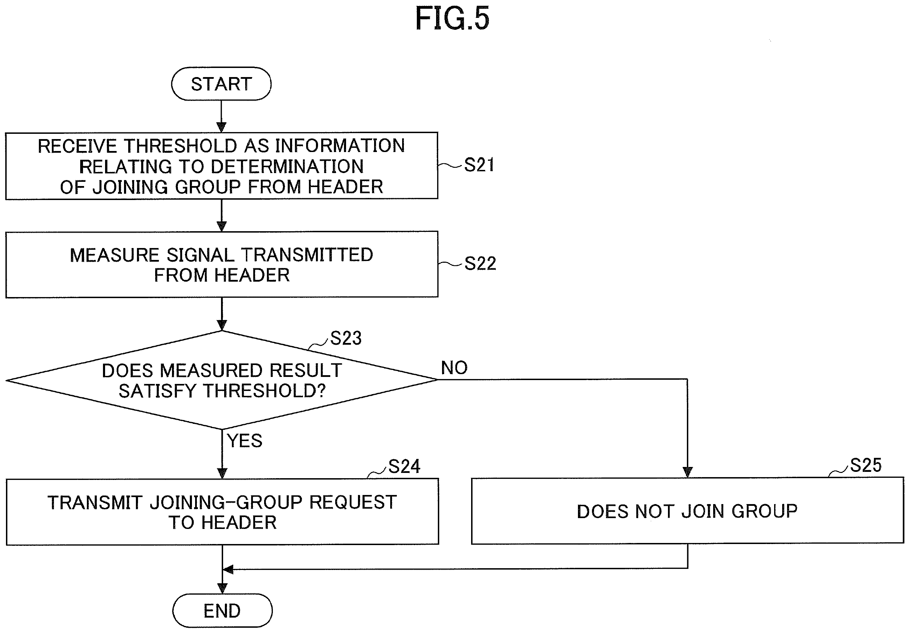

FIG. 5 is a diagram illustrating an example of measurement and determination in an embodiment of the present invention. In FIG. 5, the details of step S2 and step S3 in FIG. 4 will be described.

In step S21, the user device 20 receives a threshold or an index representing a threshold, for example, shown in Table 1, from a header as information relating to determination of joining a group. Subsequently, the user device 20 measures the signal transmitted from the header (S22). The signal to be measured may be, for example, SLSS, SL CSI-RS, or DMRS.

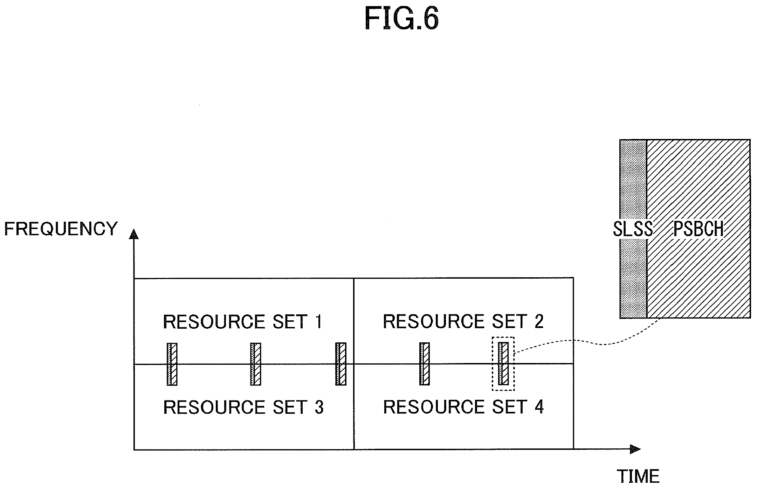

FIG. 6 is a diagram illustrating an example of signal transmission according to an embodiment of the present invention. As shown in FIG. 6, information relating to determination of joining a group is transmitted periodically from the user device 20A acting as a header via SLSS or/and PSBCH. The SLSS is transmitted as a signal for sensing, and the user device 20 adjacent to the header measures the SLSS. Further, in the example shown in FIG. 6, four resource sets are specified, and each resource set is associated with either SLSS or PSBCH. Here, for example, an operation of sensing a resource set relating to other headers may be performed separately.

SLSS and PSBCH are allocated in part of or near the frequency or time domain of the associated resource set. For example, as shown in FIG. 6, SLSS and PSBCH may be allocated by being at least partially multiplexed in a plurality of resource sets and time or frequency domains. For example, as shown in FIG. 6, three sets of SLSS and PSBCH multiplexed in the time domain or frequency domain may be allocated in the resource set 1 and resource set 3, and two sets of SLSS and PSBCH multiplexed in the time domain or frequency domain may be allocated in the resource set 2 and resource set 4.

Information relating to the determination of joining a group is received by the user device 20 via PSBCH or/and SLSS. Information relating to the determination of joining a group may include, for example, identifiers identifying a group header, indices of the resource set, and/or information indicating thresholds of sensing. Here, some or all of the information relating to determination of joining a group may be transmitted, for example, by upper layer signaling via PSSCH. For example, a user device 20 that is a header and a user device 20 that intends to join a group may establish a connection, and information relating to determination of joining a group may be transmitted to the user device 20 that intends to join the group by upper layer signaling.

Here, an identifier identifying a group header may be excluded from the information relating to determination of joining a group. For example, based on the detection of an SLSS or other reference signal in which a special sequence for the header is used, a group header may be identified by determining whether an SLSS transmitted from the user device 20 acting as a header or an SLSS transmitted from the user device 20 that is not the header. A group header may be identified by implicit indication. For example, if some or all of the information relating to determination of joining a group is detected from SLSS and PSBCH, the user device 20 may identify that the SLSS and PSBCH have been transmitted from the group header.

The index of the resource set may also be excluded from the information relating to determination of joining a group. An index of a resource set may be associated with a SLSS sequence (or an ID distinguished by the location of the time-frequency domain). The resource set may be time division multiplexed, frequency division multiplexed, or code division multiplexed. Table 2 shows an example of associating a resource set with a SLSS sequence (or an ID distinguished by the location of the time and frequency domain).

**[Table 2]**

| Resource set | SLSS sequence |
|---|---|
| Resource set 1 | n0 to n1 |
| Resource set 2 | n2 to n3 |
| Resource set 3 | n4 to n5 |

As shown in Table 2, "resource set 1" is associated with SLSS-ID "n0" and "n1", "resource set 2" is associated with SLSS-ID "n2" and "n3", and "resource set 3" is associated with SLSS-ID "n4" and "n5". For example, if SLSS-ID "n0" is specified to be used by a user device 20 that acts as a group header, and SLSS-ID "n1" is specified to be used by a user device 20 that does not act as a group header, the user device 20 that intends to join the group can recognize that upon receiving of SLSS to detect "n0", the "resource set 1" is the resource set associated with the group header.

It should be noted that a SLSS sequence used by each of headers of a plurality of groups (or an ID distinguished by the location of the time-frequency domain) may be associated with a single resource set. It should be noted that the SLSS sequence (or the ID distinguished by the location of the time-frequency domain) may be associated with an ID corresponding to part or all of the time domain, the frequency domain, and the code domain.

The following description is given by referring back to FIG. 5. In step S23, the user device 20 determines whether or not the measurement result of the signal transmitted from the header satisfies the threshold acquired in step S21. For example, the measurement result may be RSRP. If the measurement results satisfy the threshold (YES in S23), then the process proceeds to step S24, and if the measurement results do not satisfy the threshold (NO in S23), then the process proceeds to step S25.

In step S24, the user device 20 transmits a joining-the-group request to the header. That is, the user device 20 that intends to join the group determines to be a member of the group, when the signal from the user device 20, which is one or more headers, satisfies the threshold shown in Table 1 as a result of sensing. The thresholds shown in Table 1 may be determined per group or per header of a group, and different thresholds may be used for respective determinations. As described in FIG. 5, sensing is performed on a sensing signal (e.g., SLSS) transmitted from a user device 20 acting as a group header.

Meanwhile, in step S25, the user device 20 terminates the process of flowchart without joining the group relating to the header. Here, the user device 20 that intends to join the group may determine not to be a member of the group, but to be a group header instead, if results of sensing signals from the user devices 20, which are all headers, do not satisfy the threshold shown in Table 1.

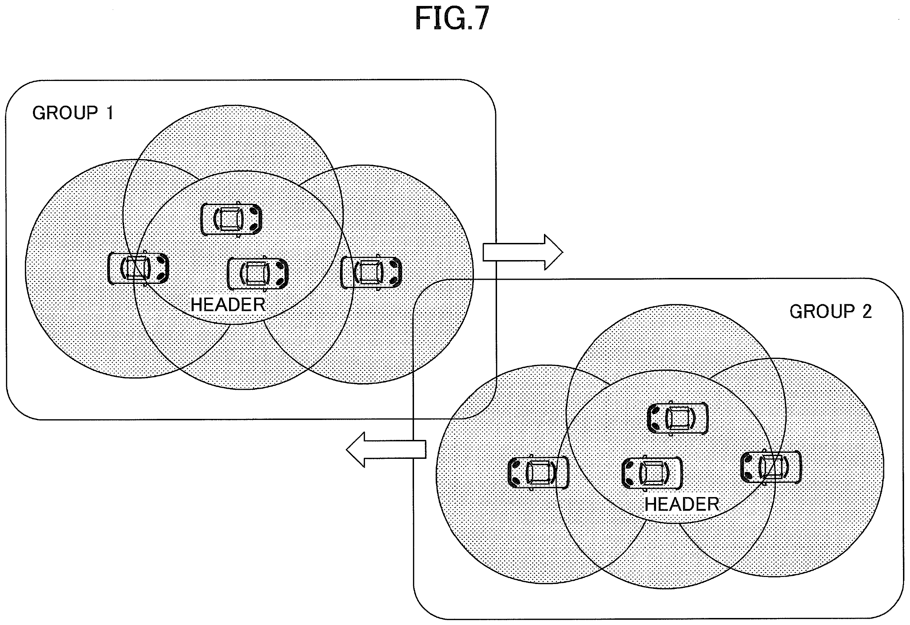

FIG. 7 is a diagram illustrating an example of operation relating to a positional state of a group according to an embodiment of the present invention. The user device 20 acting as a group header may disband the group and retransition to a header or member again if the sensing result of a signal from the user device 20, which is the other header or headers, satisfies a threshold shown in Table 1.

For example, as shown in FIG. 7, when groups 1 and 2 are adjacent to each other, as a result of sensing, a signal from the user device 20, which is the header of another group e.g., in a group 2, may satisfy a threshold shown in Table 1 in the user device 20 acting as a group header e.g., in a group 1. The user device 20 acting as a header in the group 1 may disband the group 1 and retransition to a header or member again if the sensing result of a signal from the user device 20, which is the other header in another group 2, satisfies a threshold shown in Table 1.

The following description is given by referring back to FIG. 4. In step S3, when the determination is made to join the group in step S2 as described in FIG. 5, the user device 20 transmits a joining-the-group request to the user device 20A. Subsequently, the user device 20A transmits permission to join a group to the user device 20B (S4). Subsequently, in step S5, the user device 20B joining the group communicates with the user device 20A or other user devices 20 within the group.

In accordance with the above-described embodiment, the user device 20 acting as a header transmits information relating to the determination of joining a group to the adjacent user device 20, thereby enabling a group configuration of semi-distributed MAC and allowing the adjacent user device 20 to join a group associated with the header in which suitable communication conditions can be expected.

That is, a user device can join an appropriate group in device-to-device direct communications.

### (DEVICE CONFIGURATION)

Next, a functional configuration example of the base station 10 and the user device 20 that execute the process and operation described above will be described. The base station 10 and user device 20 include the functions of implementing the embodiments described above. However, each of the base stations 10 and the user device 20 may include only some of the functions in the embodiments.

### <BASE STATION 10>

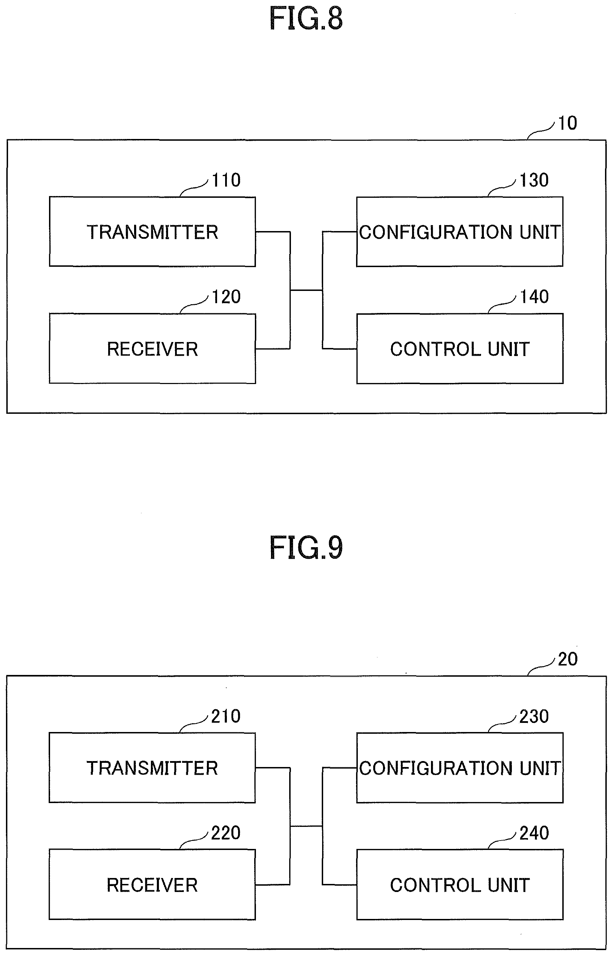

FIG. 8 is a diagram illustrating a functional configuration example of a base station 10. As shown in FIG. 8, the base station 10 includes a transmitter 110, a receiver 120, a configuration unit 130, and a control unit 140. The functional configuration shown in FIG. 8 is merely one example. Any terms for describing functional classification and functional components may be applied insofar as the operations according to the present embodiment may be executed.

The transmitter 110 includes a function of generating a signal to be transmitted to the user device 20 and of transmitting the signal wirelessly. The receiver 120 includes a function of receiving various signals transmitted from the user device 20 and of acquiring information of an upper layer, for example, from the received signals. The transmitter 110 has the function of transmitting NR-PSS, NR-SSS, NR-PBCH, DL/UL control signal, DL reference signal, etc. to the user device 20.

The configuration unit 130 stores preset setting information and various configuration information transmitted to the user device 20 in the storage, and reads the setting information from the storage as required. The content of the setting information is, for example, information relating to the setting of D2D communication.

As described in the embodiment, the control unit 140 performs a processing relating to a setting for the user device 20 to perform D2D communication. The control unit 140 transmits scheduling of the D2D communication to the user device 20 through the transmitter 110. The transmitter 110 may include a functional unit for transmitting signals in the control unit 140, and the receiver 120 may include a functional unit for receiving signals in the control unit 140.

### <USER DEVICE 20>

FIG. 9 is a diagram illustrating an example of a functional configuration of a user device 20. As shown in FIG. 9, the user device 20 includes a transmitter 210, a receiver 220, a configuration unit 230, and a control unit 240. The functional configuration shown in FIG. 9 is merely one example. Any terms for describing functional classification and functional components may be applied insofar as the operations according to the present embodiment may be executed.

The transmitter 210 generates a transmission signal from the transmit data and transmits the transmission signal wirelessly. The receiver 220 receives a variety of signals wirelessly and acquires a higher layer signal from the received physical layer signal. The receiver 220 has a function of receiving, from the base station 10, NR-PSS, NR-SSS, NR-PBCH, DL/UL/SL control signal or reference signal, etc. For example, the transmitter 210 transmits PSCCH (Physical Sidelink Control Channel), PSSCH (Physical Sidelink Shared Channel), PSDCH (Physical Sidelink Discovery Channel), PSBCH (Physical Sidelink Broadcast Channel), and the like to another user device 20 as D2D communication, and the receiver 220 receives PSCCH, PSSCH, PSDCH, or PSBCH from another user device 20.

The configuration unit 230 stores various setting information received via the receiver 220 from the base station 10 or the user device 20 in the storage, and reads the configuration unit 230 from the storage as required. The configuration unit 230 also stores preset information. The content of the setting information is, for example, information relating to the setting of D2D communication.

The control unit 240 controls D2D communication with other user devices 20 as described in the embodiment. The control unit 240 performs processing relating to sensing or measurement of D2D communication. The control unit 240 may also schedule the D2D communication. The transmitter 210 may include a functional unit for transmitting signals in the control unit 240, and the receiver 220 may include a functional unit for receiving signals in the control unit 240.

### (HARDWARE CONFIGURATION)

The block diagrams (FIGS. 8 and 9) used in the description of the above embodiment indicates blocks of functional units. These functional blocks (components) are implemented by any combination of at least one of hardware and software. Here, a method for implementing each functional block is not particularly limited. That is, each functional block may be implemented using one device that is physically or logically coupled, or two or more devices that are physically or logically separated may be connected directly or indirectly (e.g., using wires, wireless, etc.) and implemented using a plurality of these devices. Functional blocks may be implemented in combination with software in one or more of the above-described devices.

Functions include, but are not limited to, judgment, determination, determination, calculation, calculation, processing, derivation, investigation, discovery, confirmation, reception, transmission, output, access, access, resolution, selection, establishment, comparison, assumption, expectation, discovery, notification, communication, forwarding, configuration, reconfiguring, assignment, mapping, and assignment. For example, a functional block (component) that functions to transmit is called a transmitter or a transmitter. None of these are particularly limited in their implementation as described above.

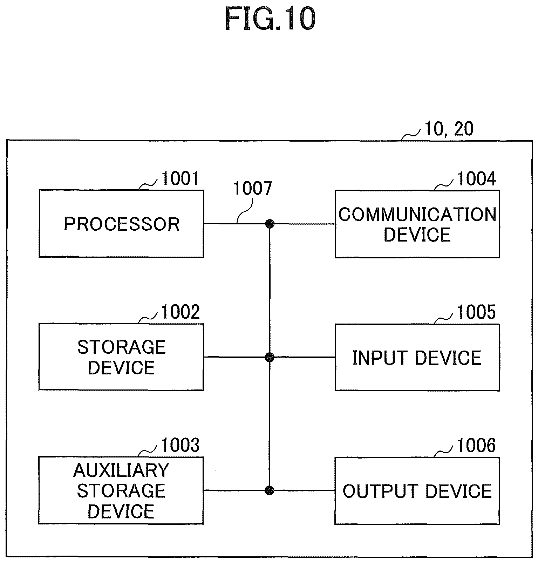

For example, a base station 10, a user device 20, or the like in one embodiment of the present disclosure may function as a computer for processing the radio communication method of the present disclosure. FIG. 10 is a diagram illustrating an example of a hardware configuration of a base station 10 and a user device 20 according to an embodiment of the present disclosure. The base station 10 and user device 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, device, unit, etc. The hardware configuration of the base station 10 and the user device 20 may be configured to include one or more of the devices illustrated in the figure or may be configured without some devices.

Each function of the base station 10 and the user device 20 is realized by having the processor 1001 read a predetermined software (program) on hardware such as the storage device 1002 to perform the operation by the processor 1001 to control communication by the communication device 1004 or to control at least one of reading and writing data in the storage device 1002 and the auxiliary storage device 1003.

A processor 1001, for example, operates an operating system to control the entire computer. The processor 1001 may be configured to include a central processing unit (CPU) having an interface with peripherals, a control device, an operation device, and registers. For example, the above-described control unit 140, control unit 240, or the like may be implemented by the processor 1001.

In addition, the processor 1001 loads programs (program codes), software modules or data from at least one of the auxiliary storage device 1003 and/or the communication device 1004 into the storage device 1002, and executes various processes according to the loaded programs, software modules or data. As the program, a program is used which causes a computer to execute at least a part of the operations described in the above-described embodiments. For example, the control unit 140 of the base station 10 illustrated in FIG. 8 may be implemented by a control program stored in the storage device 1002 and operated by the processor 1001. For example, the control unit 240 of the user device 20 illustrated in FIG. 9 may be implemented by a control program stored in the storage device 1002 and operated by the processor 1001. While the various processes described above have been described as being executed by one processor 1001, they may be executed simultaneously or sequentially by two or more processors 1001. The processor 1001 may be implemented with one or more chips. Note that the program may be transmitted from a network via an electric communication line.

The storage device 1002 may be a computer-readable recording medium composed of at least one of a ROM (Read Only Memory), an EPROM (Erasable Programmable ROM), an EEPROM (Electrically Erasable Programmable ROM), a RAM (Random Access Memory) and the like. The storage device 1002 may be referred to as a register, a cache, a main memory (a main storage), or the like. The storage device 1002 may store executable programs (program codes), software modules, and the like for implementing a communication method according to the embodiment of the present invention.

The auxiliary storage device 1003 is a computer-readable recording medium composed, for example, of at least one of an optical disk such as a CD-ROM (Compact Disc ROM), a hard disk drive, a flexible disk, a magneto-optical disk (e.g., a compact disk, a digital versatile disk, and a Blu-ray (registered trademark) disk), a smart card, a flash memory (e.g., a card, a stick, and a key drive), a floppy (registered trademark) disk, and a magnetic strip. The auxiliary storage device 1003 may be referred to as an auxiliary storage. The above-described storage medium may be, for example, a database, a server, or another appropriate medium including at least one of the storage device 1002 and the auxiliary storage device 1003.

The communication device 1004 is hardware (transmission/reception device) for performing communication between computers via at least one of a wired and wireless network, and, for example, the communication device 1004 is also referred to as a network device, a network controller, a network card, a communication module, etc. The communication device 1004 may include, for example, a high frequency switch, a duplexer, a filter, a frequency synthesizer, or the like to achieve at least one of a frequency division multiplex (FDD) and a time division duplex (TDD). For example, a transmitting/receiving antenna, an amplifier, a transmitter-receiver, a transmission line interface, or the like may be implemented by the communication device 1004. The transmitter-receiver may be physically or logically separated as the transmitter and the receiver.

The input device 1005 is an input device (e.g., a keyboard, a mouse, a microphone, a switch, a button, a sensor, etc.) for receiving an input from outside. The output device 1006 is an output device (e.g., display, speaker, LED lamp, etc.) that performs output toward outside. The input device 1005 and the output device 1006 may be of an integrated configuration (e.g., a touch panel).

In addition, the respective devices such as the processor 1001 and the storage device 1002 may be connected via a bus 1007 for mutually communicating information with one another. The bus 1007 may be configured using a single bus or may be configured using different buses between devices.

The base station 10 and the user device 20 may also include hardware such as a microprocessor, a digital signal processor (DSP), an ASIC (Application Specific Integrated Circuit), a PLD (Programmable Logic Device), and a FPGA (Field Programmable Gate Array), wherein the hardware may implement some or all of the functional blocks. For example, processor 1001 may be implemented using at least one of these hardware components.

### (SUMMARY OF EMBODIMENTS)

As described above, according to an embodiment of the present invention, a user device is provided. The user device includes a control unit configured to perform scheduling on another user device within a group in device-to-device direct communications; a transmitter configured to transmit information relating to determination of joining the group to the another user device; and a receiver configured to receive information of a joining-the-group request from the another user device.

With the above configuration, the user device 20 acting as a header assists in the group configuration of the semi-distributed MAC by transmitting a signaling relating to the determination of joining a group to the adjacent user device 20, and the adjacent user device 20 may join a group of the header in which suitable communication conditions can be expected. That is, a user device can join an appropriate group in device-to-device direct communications.

The information relating to determination of joining a group includes information relating to a threshold for determining whether to join the group, and information indicating a resource set associated with the group. Such a configuration allows the adjacent user device 20 to join a group of the header where suitable communication conditions can be expected.

The threshold for determining whether to join the group is a threshold for making determination for a measurement result of a signal transmitted from the user device performing the scheduling, the scheduling being at least partially multiplexed with a resource set associated with the group in a time domain or a frequency domain. Such a configuration allows the adjacent user device 20 to join a group of the header where suitable communication conditions can be expected.

The information relating to determination of joining a group may or may not include an identifier indicating a user device performing the scheduling. Such a configuration allows the user device 20 to reduce overhead of the signaling.

The resource set associated with the group may be associated with an ID of a synchronization signal included in a signal transmitted from one or more user devices performing the scheduling. With such a configuration, the user device 20 can identify a resource set with the ID of the synchronization signal when the resource set is divided and multiplexed in a time domain, a frequency domain, or a code domain.

The group may be disbanded in a case where the measurement result of a signal transmitted from another user device that performs scheduling satisfies the threshold for determining whether to join the group. With such a configuration, the user device 20 may disband the group and initiate regrouping when the conditions for forming the group deteriorate.

### (SUPPLEMENTARY DESCRIPTION OF EMBODIMENTS)

While embodiments of the present invention have been described above, the disclosed invention is not limited to such embodiments, and those skilled in the art will understand various modifications, modifications, alternatives, substitutions, and the like. Descriptions have been made using specific numerical examples to facilitate understanding of the invention, but, unless otherwise indicated, these values are merely examples and any suitable value may be used. In the above description, partitioning of items is not essential to the present invention. Matters described in two or more items may be combined if necessary. Matters described in one item may be applied to matters described in another item (as long as they do not conflict). The boundaries of functional parts or processing parts in the functional block diagram do not necessarily correspond to the boundaries of physical parts. Operations of multiple functional units may be physically performed in a single part, or operations of a single functional unit may be physically performed by multiple parts. The order of steps in the above described operating procedures according to an embodiment may be changed as long as there is no contradiction. For the sake of description convenience, the base station 10 and the user device 20 have been described by using functional block diagrams. These devices may be implemented by hardware, by software, or by combination of both. The software which is executed by a processor included in the base station 10 according to an embodiment and the software which is executed by a processor included in the user device 20 may be stored in a random access memory (RAM), a flash memory, a read-only memory (ROM), an EPROM, an EEPROM, a register, a hard disk drive (HDD), a removable disk, a CD-ROM, a database, a server, or any other appropriate recording medium.

Indication (Notification) of information is not limited to the embodiments/embodiments described herein, but may be performed in other ways. For example, indication of information may be performed via physical layer signaling (for example, Downlink Control Information (DCI) or Uplink Control Information (UCI)), higher-layer signaling (for example, RRC signaling, MAC signaling, broadcast information (Master Information Block (MIB), or System Information Block (SIB))), other signals, or by a combination thereof.
Moreover, RRC signaling may be referred to as an RRC message, and, for example, the RRC message may be an RRC connection setup (RRC Connection Setup) message, a RRC connection reconfiguration (RRC Connection Reconfiguration) message, or the like, for example.

Each aspect/embodiment described herein may be applied to LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-Wide Band), Bluetooth (registered trademark), and a system that utilize other suitable systems and/or a next generation system expanded based on such a system. Multiple systems may also be combined and applied (e.g., combinations of at least one of LTE and LTE-A with 5G, etc.).

The order of processes, sequences, flowcharts, etc. of each aspect/embodiment described in the present specification may be exchanged as long as there is no inconsistency. For example, for the methods described in the specification, the elements of the various steps are presented in an exemplary order and are not limited to a specific order presented.

The specific operation that is performed by the base station 10 in this specification may be performed by its upper node in some cases. In a network composed of one or more network nodes having a base station 10, it is clear that the various operations performed for communication with the user device 20 may be performed by other network nodes than the base station 10 and/or the base station 10. Examples of such other network nodes include, but not limited to, MME or S-GW. In the above embodiments, a case where there is one network node other than the base station 10 is described; however, a plurality of other network nodes other than the base station 10 may be combined (e.g., MME and S-GW).

The information or signals, etc. described in this disclosure may be output from a higher layer (or lower layer) to a lower layer (or upper layer). It may be input and output through a plurality of network nodes. Input and output may be performed through a plurality of network nodes.

Input and output Information, etc., may be stored in a specific location (for example, a memory) and may be managed by a management table. The input and output information and the like may be overwritten, updated, or rewritten. The output information and the like may be erased. The input information and the like may be transmitted to other apparatuses.

Determination in the present disclosure may be made by a value (0 or 1) represented by one bit, may be made by a Boolean value (Boolean: true or false), or may be made by comparison of numerical values (comparison with a predetermined value, for example).

The software should be widely interpreted to mean an instruction, an instruction set, a code, a code segment, a program code, a program, a subprogram, a software module, an application, a software application, a software package, a routine, a subroutine, an object, an executable file, an execution thread, a procedure, a function, etc., regardless of whether the software is referred to as software, firmware, middleware, microcode, hardware description language or other names.

Furthermore, software, instructions, information, etc., may be transmitted and received via a transmission medium. For example, if the software is transmitted from a web site, server, or other remote source using at least one of a wired technology (coaxial cable, optical fiber cable, twisted pair, digital subscriber line (DSL: Digital Subscriber Line, etc.) and a wireless technology (infrared, microwave, etc.), at least one of these wired technology and wireless technology is included in the definition of a transmission medium.

Information, signals, etc., described in the present disclosure may be represented using any of various other techniques. For example, data, instructions, commands, information, signals, bits, symbols, chips, and the like mentioned in the entire description may be represented by voltage, current, electromagnetic waves, magnetic field or magnetic particles, optical field or photons, or any combination thereof.

Note that the terms described in this disclosure and the terms necessary for understanding of this specification may be replaced with terms having the same or similar meaning. For example, at least one of a channel and a symbol may be a signal (signaling). Furthermore, a signal may be a message. Furthermore, a component carrier (CC) may be referred to as a carrier frequency, a cell, etc.

The terms "system" and "network" as used in this disclosure are used interchangeably.

Furthermore, the information, parameters, etc., described in this specification may be represented by absolute values, may be represented as relative values from predetermined values, or may be represented by any other corresponding information. For example, the radio resource may be indicated by an index.

The names used for the above-described parameters are not for limiting in any point. Furthermore, mathematical expressions, etc., using these parameters may be different from those explicitly disclosed in this specification. Since the various channels (e.g., PUCCH, PDCCH, etc.) and information elements can be identified by suitable names, the various names assigned to these various channels and information elements are not for limiting in any point.

In the present disclosure, terms such as "base station", "radio base station", "base station", "fixed station", "NodeB", "eNodeB (eNB)", "gNodeB (gNB)", "access point", "transmission point", "reception point", "transmission/reception point", "cell", "sector", "cell", "cell group", "carrier", and "component carrier" may be used interchangeably. The base stations may be referred to as macrocells, small cells, femtocells, picocells, and the like.

The base station may accommodate one or more (e.g., three) cells. When the base station accommodates a plurality of cells, the entire coverage area of the base station can be divided into a plurality of smaller areas, and each smaller area may also provide communication services by base station subsystem (e.g., indoor small base station RRH: Remote Radio Head). The term "cell" or "sector" refers to a part or all of the coverage area of a base station and/or base station subsystem that provides communication service in this coverage.

In the present disclosure, terms such as "mobile station," "user terminal," "user equipment," and "terminal" may be used interchangeably.

A mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber stations, an access terminal, a mobile terminal, a wireless terminal, a remote terminal, a handset, a user agent, a mobile client, a client, or it may also be called by some other suitable terms.

At least one of the base stations and the mobile stations may be referred to as a transmitter, receiver, communication device, or the like. At least one of the base station and the mobile station may be a device installed in the mobile body, the mobile itself, or the like. The mobile may be a vehicle (e.g., a vehicle, an airplane, etc.), an unmanned mobile (e.g., a drawn, an automated vehicle, etc.) or a robot (a manned or unmanned type). It should be noted that at least one of the base stations and the mobile station includes a device that is not necessarily mobile during communication operation. For example, at least one of the base stations and the mobile stations may be an IoT (Internet of Things) device such as a sensor.

In addition, the base stations in the present disclosure may be replaced with user terminals. For example, each aspect/embodiment of the present disclosure may be applied to a configuration in which communication between a base station and a user terminal is replaced by communication between a plurality of user devices 20 (e.g., referred to as D2D (Device-to-Device), V2X (Vehicle-to-Everything), or the like. In this case, the user device 20 has a function of the above-mentioned base station 10. In addition, the words "up" and "down" may be replaced with the words corresponding to the communication between terminals (for example, "side"). For example, up and down channels may be replaced with side channels.

Similarly, the user terminal in the present disclosure may be replaced with a base station. In this case, the configuration may be that the base station has the function provided by the user terminal described above.

The terms "determine (determining)" and "decide (determining)" used in this specification may include various types of operations. The terms "determining" and "deciding" may be deemed to include, for example, judging, calculating, computing, processing, deriving, investigating, looking up (search, inquiry) (e.g., searching tables, databases or other data structures), and ascertaining. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided. "Deciding" may be replaced with "Assuming", "Expecting", "Considering", or the like.

The terms "connected," "coupled," or any variation thereof mean any direct or indirect connection or coupling between two or more elements, and may include the presence of one or more intermediate elements between the two elements "connected" or "coupled" to each other. The coupling or connection between the elements may be physical, logical or a combination thereof. For example, "connection" may be replaced with "access". As used in the present disclosure, the two elements may be considered to be "connected" or "coupled" to one another using at least one of one or more wires, cables, and printed electrical connections, and, in some nonlimiting and non-comprehensive examples, electromagnetic energy having wavelengths in the radio frequency domain, microwave domain, and light (both visible and invisible).

The reference signal may be abbreviated as RS (Reference Signal), and may be referred to as a pilot (Pilot) according to applicable standards.

The expression "on the basis of" used in the present specification does not mean "on the basis of only" unless otherwise stated particularly. In other words, the expression "on the basis of" means both "on the basis of only" and "on the basis of at least".

Any reference to elements using names, such as "first" and "second," as used in this specification does not generally limit the amount or order of those elements. These names can be used in this specification as a convenient way to distinguish between two or more elements. Accordingly, the reference to the first and second elements does not imply that only two elements can be adopted, or that the first element must precede the second element in some way.

"Means" in the configuration of each of the above-described devices may be replaced with "part," "circuit," "device," etc.

As long as "include", "including", and variations thereof are used in the specification or claims, these terms are intended to be inclusive in a manner similar to the term "comprising". Furthermore, the term "or" used in the present disclosure is intended to be not an exclusive "or".

A radio frame may be formed of one or more frames in the time domain. In the time domain, each of the one or more of frames may be referred to as a subframe. A subframe may be formed of one or more slots in the time domain. The subframe may be a fixed time length (e.g., 1 ms) that is independent of the numerology.

The numerology may be a communication parameter that is applied to at least one of the transmission and reception of a signal or channel. The numerology may, for example, show at least one of a sub-carrier interval (SCS: SubCarrier Spacing), bandwidth, symbol length, cyclic prefix length, transmission time interval (TTI), number of symbols per TTI, radio frame configuration, specific filtering processing performed by the transceiver in the frequency domain, specific windowing processing performed by the transceiver in the time domain, and the like.

The slots may consist of one or more symbols (OFDM (Orthogonal Frequency Division Multiplexing) symbols, SC-FDMA (Single Carrier Frequency Division Multiple Access) symbols, etc.) in the time domain. The slots may be in time units based on the numerology.

The slots may include a plurality of minislots. Each minislot may consist of one or more symbols in the time domain. The minislot may also be referred to as a subslot. The minislot may consist of fewer symbols than the slot. The PDSCH (or PUSCH) transmitted in time units greater than the minislot may be referred to as the PDSCH (or PUSCH) mapping type A. The PDSCH (or PUSCH) transmitted using the minislot may be referred to as the PDSCH (or PUSCH) mapping type B.

Radio frames, sub-frames, slots, minislots and symbols all represent time units for transmitting signals. Radio frames, sub-frames, slots, minislots and symbols may be used with separate designations corresponding to each.

For example, one sub-frame may be referred to as a transmission time interval (TTI), multiple consecutive sub-frames may be referred to as a TTI, and one slot or one mini-slot may be referred to as a TTI. That is, at least one of the subframes and TTIs may be a subframe (1 ms) in an existing LTE, a period shorter than 1 ms (e.g., 1-13 symbols), or a period longer than 1 ms. The unit representing the TTI may be referred to as a slot, minislot, or the like, rather than a sub-frame.

Here, the TTI refers to, for example, the minimum time unit for scheduling in radio communication. For example, in an LTE system, the base station schedules each user device 20 to allocate radio resources (such as frequency bandwidth, transmit power, etc. that can be used in each user device 20) in TTI units. The definition of TTI is not limited to this.

The TTI may be a transmission time unit, such as a channel encoded data packet (transport block), code block, code word, or the like, or may be a processing unit, such as scheduling, link adaptation, or the like. When a TTI is provided, the time interval (e.g., the number of symbols) in which the transport block, code block, code word, or the like is actually mapped may be shorter than the TTI.

If one slot or one minislot is referred to as a TTI, one or more TTIs (i.e., one or more slots or one or more minislots) may be the minimum time unit for scheduling. Also, the number of slots (the number of minislots) constituting the minimum time unit of the scheduling may be controlled.

TTIs having a time length of 1 ms may normally be referred to as TTIs (TTIs in LTE Rel.8-12), normal TTIs, long TTIs, normally subframes, normal subframes, long subframes, slots, and the like. A TTI that is usually shorter than a TTI may be referred to as a shortened TTI, a short TTI, a partial or fractional TTI, a shortened sub-frame, a short sub-frame, a minislot, a sub-slot, a slot, or the like.

Note that a long TTI (e.g., a TTI, a sub-frame, etc.) may be replaced with a TTI having a long time exceeding 1 ms, or a short TTI (e.g., a shortened TTI) may be replaced with a TTI having a TTI having a TTI length less than the TTI length of a long TTI and a TTI length greater than 1 ms.

A resource block (RB) is a resource allocation unit in the time domain and the frequency domain, and may include one or more consecutive subcarriers in the frequency domain. The number of subcarriers included in the RB may be the same, regardless of the numerology, for example 12. The number of subcarriers included in the RB may be determined based on the numerology.

The time domain of the RB may also include one or more symbols in the time domain, and may have a length of one slot, one minislot, one subframe, or one TTI. Each of one TTI and one subframe may be formed of one or more resource blocks.

The one or more RBs may be referred to as physical resource blocks (PRB: Physical RB), sub-carrier groups (SCG: Sub-Carrier Group), resource element groups (REG: Resource Element Group), PRB pairs, RB pairs, and the like.

The resource block may also consist of one or more resource elements (RE: Resource Element). For example, the 1RE may be a radio resource region of 1 subcarrier and 1 symbol.

The bandwidth portion (BWP: Bandwidth Part) (which may be referred to as a partial bandwidth or the like) may represent a subset of consecutive common RB (common resource blocks) for a numerology in a carrier. Here, the common RB may be identified by an index of the RB relative to the common reference point of the carrier. The PRB is defined in a BWP and may be numbered in the BWP.

BWP may include BWP (UL BWP) for UL and BWP (DL BWP) for DL. For a UE, one or more BWPs may be configured in one carrier.

At least one of the configured BWPs may be active, and the UE may not assume sending or receiving a predetermined signal/channel outside the active BWP. In addition, the terms "cell" and "carrier" in this disclosure may be replaced with "BWP."

The radio frames, sub-frames, slots, minislots and symbols described above are exemplary only. For example, the number of sub-frames contained in a radio frame, the number of slots per sub-frame or radio frame, the number of mini-slots contained in the slots, the number of symbols and RBs contained in the slots or mini-slots, the number of sub-carriers contained in the RB, and the number of symbols, symbol lengths, cyclic prefixes (CP: Cyclic Prefix) lengths and the like in the TTI can be varied.

In the present disclosure, if an article is added by translation, such as, for example, a, an, and the in the English language, the present disclosure may include that the nouns following these articles are plural.

In this disclosure, the term "A and B are different" may mean "A and B are different from each other. "The term may mean that "A and B are different from C, respectively. "Terms such as "leave" or "joined" may be interpreted in the same way as "different."

Aspects/embodiments described in this specification may be used alone or in combination, or may be switched in accordance with execution. Furthermore, indication of predetermined information (e.g., indication of "being X") is not limited to indication that is made explicitly, and the indication may be made implicitly (e.g., indication of the predetermined information is not performed).

In this disclosure, the UE Group is an example of a group. The header is an example of a user device 20 for scheduling. The SLSS ID is an example of the ID of the synchronization signal.

The present invention is described in detail above. It is apparent to a person ordinarily skilled in the art that the present invention is not limited to the embodiments described in the specification. The invention can be implemented as modifications and modifications without departing from the spirit and scope of the invention as defined by the appended claims. Accordingly, the description herein is intended for illustrative purposes and does not have any limiting significance to the present invention.

### LIST OF REFERENCE SYMBOLS

- 10: base station
- 110: transmitter
- 120: receiver
- 130: configuration unit
- 140: control unit
- 20: user device
- 210: transmitter
- 220: receiver
- 230: configuration unit
- 240: control unit
- 1001: processor
- 1002: storage device
- 1003: auxiliary storage device
- 1004: communication device
- 1005: input device
- 1006: output device

## Claims

1. A user device comprising:
a control unit configured to perform scheduling for another user device within a group in device-to-device direct communications;
a transmitter configured to transmit information relating to determination of joining the group to the another user device; and
a receiver configured to receive information of a joining-the-group request from the another user device.

2. The user device according to claim 1,
wherein
the information relating to determination of joining the group includes information relating to a threshold for determining whether to join the group, and information indicating a resource set associated with the group.

3. The user device according to claim 2,
wherein
the threshold for determining whether to join the group is a threshold for making determination for a measurement result of a signal transmitted from the user device performing the scheduling, the scheduling being at least partially multiplexed with a resource set associated with the group in a time domain or a frequency domain.

4. The user device according to claim 2,
wherein
the information relating to determination of joining the group does not include an identifier indicating the user device performing the scheduling.

5. The user device according to claim 2,
wherein
the resource set associated with the group is associated with an ID of a synchronization signal included in a signal transmitted from one or more user devices performing the scheduling.

6. The user device according to claim 3,
wherein
the group is disbanded in a case where the measurement result of a signal transmitted from another user device that performs scheduling satisfies the threshold for determining whether to join the group.
